# EUROPEAN PATENT SPECIFICATION

(11) **EP 2 122 904 B1**
(45) Date of publication and mention of the grant of the patent: **19.06.2019**
(21) Application number: 08713113.2
(22) Date of filing: 11.01.2008
(51) Int. Cl.: G01S 19/05

(54) **IMPROVED DIGITAL RADIO HEAD SYSTEM AND METHOD**
VERBESSERTES DIGITALES FUNKKOPFSYSTEM UND VERFAHREN
SYSTÈME DE TÊTE RADIO NUMÉRIQUE PERFECTIONNÉ ET PROCÉDÉ

(30) Priority: 12.01.2007 US 880144 P
(43) Date of publication of application: 25.11.2009
(73) Proprietor: Intel Corporation, Santa Clara, CA 95054 (US)
(72) Inventor: CARICHNER, Scott, Rancho Santa Margarita, CA 92688 (US); DEMARCO, Anthony, Newport Beach, CA 92660 (US)
(74) Representative: Goddar, Heinz J.
(86) International application number: PCT/US2008/000431
(87) International publication number: WO 2008/088762

(56) References cited:
- WO-A1-2004/054290
- US-A1- 2003 036 374
- US-A1- 2003 048 758
- US-A1- 2005 107 124
- US-A1- 2006 208 088
- US-A1- 2006 252 378

## Description

### FIELD OF THE INVENTION

The invention relates in general to wireless communication base stations and, more particularly, to digital radio heads that are connected to base stations, or access points connected to an aggregator, through a wired communication channel.

### BACKGROUND OF THE INVENTION

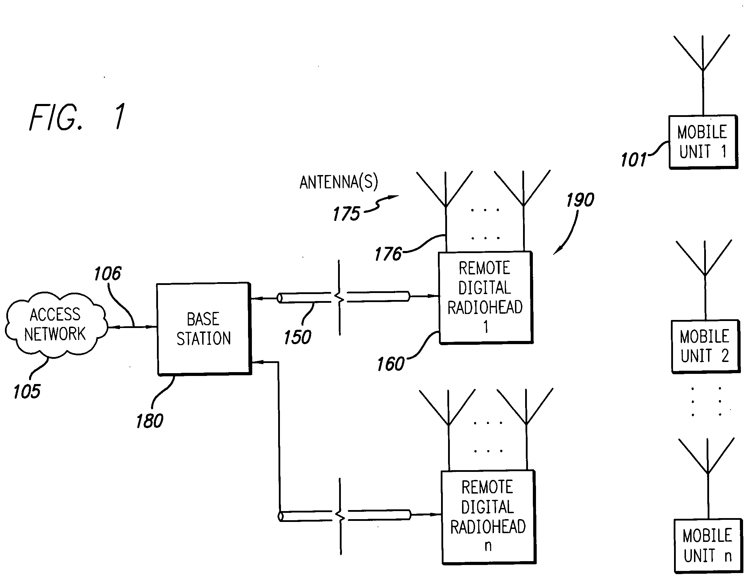

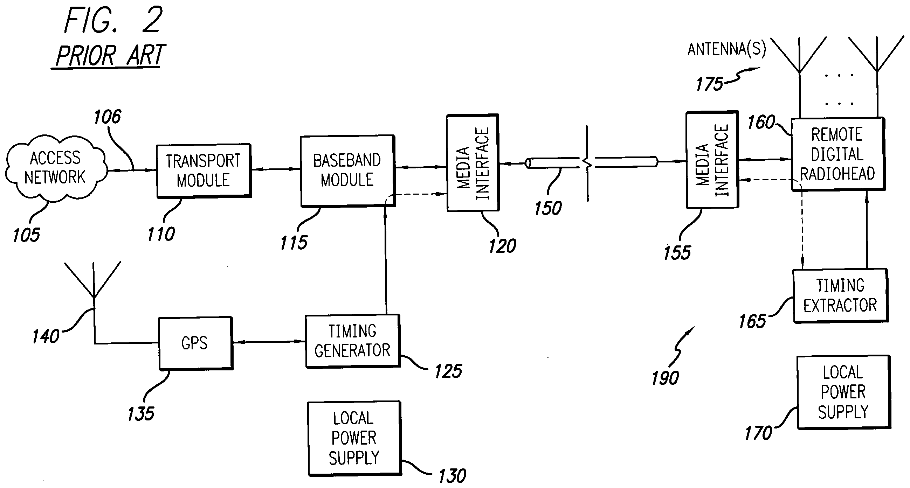

Modern wireless communication systems often use remote digital radio heads to their advantage. There are many reasons why it is advantageous to move closer to the antenna the sub-systems that create the RF power from digital data, and those that create the baseband received digital data from the received RF power. In Fig. 1 a typical base station deployment is shown. The base station (180) is connected to an access network (105) at an access-network connection point to provide primary data connection to the larger network. The base station will typically support one or more sectors, each of which is connected to one or more transmit and receive antennas (175) at transmit locations (190) remote from the base stations. By using a digital radio head (160) at the remote locations (190) to support each sector, the required distance between the base station (180) and the antennas (175) can be bridged by a more convenient transmission media (150). (As used herein and consistent with well known terminology in the art, a digital radio head comprises the basic components to provide an RF signal for wireless transmission from an input digital communications signal and includes at least a digital to analog conversion block, up converter circuitry, a power amplifier, and similarly components to receive an RF signal including a low noise amplifier, down converter circuitry, and an analog to digital conversion block. Typically the radio head will include other standard components such as filters and couplers. Therefore, these well known radio head components will not be described further herein. Additional circuitry may also typically be present at the radio head location as illustrated in more detail in Fig. 2 discussed below.) Inexpensive, high performance links to implement (150) are known. Examples are inexpensive transmission lines and fiber optic cables.

If the distance between the radio head and the antenna can be kept small, less expensive cables can be used for the RF link (176) that connects to the antennas (175). The user can use this advantage to decrease system cost or to increase system performance or some combination of the two. There are several existing standardized and proprietary inter-connection methods for the digital link (150). All of these systems transfer critical reference timing from the base station (180) to the remote digital radio heads (160) to meet the performance required from modern wireless communication protocols. All modern wireless protocols (TDMA, CDMA, OFDM) require precision timing to be transferred to the radio heads for many reasons. Some examples are for maintaining precise carrier frequencies, to allow cooperation between different base stations, to identify distances to mobile users, and to minimize inter and intra cell interference.

In Fig. 2 a conventional approach to implementing this synchronization is shown. In this case an inexpensive satellite derived timing source (135) is used to obtain precise time and frequency references. A satellite timing source (135) must be connected to an antenna (140) with preferably unobstructed view of the sky. This can require extra cost and difficulty to implement. A typical satellite timing source, such as GPS (135), supplies a precise frequency reference, often at 10 MHz and a precise 1 pulse-per-second (PPS) signal that is aligned with Greenwich Mean Time (GMT). These signals are fed into a timing generator (125) that will reduce jitter, if necessary on the oscillator, create frequencies that are typically used in wireless base stations (e.g. 30.72 MHz), and make the appropriate framing signals and time-stamping signals.

The baseband module (115) converts a relatively small amount of user data, which includes bearer data and may also include control and management data, into a larger amount of baseband data in the protocol of choice for the base station. This typically requires serialized bit rates in the media interface (120) of hundreds of Mb/s to several Gb/s. This large amount of data is supporting a much lower amount of actual user data in the wireless cell. In fact the ratio is typically between 20 and 100 times of data expansion between the backhaul link (106) and the baseband link (150). This expansion supports the robustness of the wireless link to the well known degradations involved with mobile wireless links.

The timing reference at the base station is fed as shown in Fig. 2 through the media interface (120) in several well known methods. These include some methods standardized by the OBSAI and CPRI standards committees. At the remote radio head a second media interface (155), strips off the encoded information used to transmit the synchronization information and sends it to a timing extractor module (165). The timing extractor (165) regenerates the data in a format similar to the data that came from the timing generator (125). The timing data and frequency reference is used by the digital radio head (160) to control carrier frequencies, data rates, and to transmit the proper baseband sample at the proper time. Conversely it stamps the received data with the proper time so that the base station (180) can process the information correctly.

WO 2004/504290 discloses a wireless communication system comprising a series of base stations, a digital hub connected to the base stations, and one or more remote sites connected to the digital hub via a digital network, wherein synchronization between the digital hub and the remote site(s) is maintained using GPS receivers located at both the digital hub and the remote site(s).

### SUMMARY OF THE INVENTION

The invention is defined in the independent claims. Advantageous embodiments are set out in the dependent claims.

In an aspect the present invention provides a wireless communications system comprising a base station receiving communications signals from an access network and one or more radio heads remotely configured from the base station and coupled for communication to the base station over a wired transmission link, each radio head coupled to one or more antennas to transmit and receive wireless communications signals. A satellite receiver antenna is configured at the radio head location and a timing generator is also configured at the radio head location and coupled to the satellite receiver antenna. The timing generator extracts timing information from a satellite signal received at the satellite receiver antenna and provides timing signals to the radio head and to the base station. A timing extractor at the base station regenerates data in a format similar to the timing signals received from the timing generator. And, the base station and radio head employ the timing signals to synchronize transmission of communications signals along the wired transmission link between the base station and radio head.

Alternatively, the satellite receiver antenna may be a GPS receiver and the satellite signal is a GPS signal. The wired transmission link may be a transmission line or an optical fiber. The timing information from the satellite signal may comprise a frequency reference and the timing generator may include a clock filter to filter the frequency reference. The timing information from the satellite signal may further comprise a periodic real time reference signal and the timing generator may further comprise a framer to provide frames referenced to points in real time derived from the periodic real time reference signal. The timing generator may also further comprise a time stamper which adds a stamp to the timing signal indicating the precise time for a fixed reference point in each frame. The one or more radio heads may comprise a plurality of separate radio heads coupled together through a wired link wherein one radio head is coupled to the base station through the wired transmission link.

In another aspect the present invention provides a method for providing a communications signal from a first location at an access-network connection point to a second location adjacent one or more antennas located remotely from the first location, for wireless transmission at the second location. The method comprises receiving a communications signal from an access-network connection point at the first location, transmitting the communications signal in digital form along a wired transmission link to the second location located remotely from said first location, deriving a timing signal at the second location using an external reference timing source, and performing baseband processing on the digital communications signal at the second location using the timing signal. The method further comprises providing the baseband processed signal to a radio head at the second location, and providing the timing signal derived at the second location to the first location. In the method, the first location regenerates data in a format similar to the timing signal received from the second location, wherein the first location and the second location employ the timing signal to synchronize transmission of communication signals along the wired transmission link between the first location and the second location.

Alternatively, the baseband processing may comprise physical layer processing of the digital communications signals. The baseband processing may preferably further comprise MAC layer processing of the digital communications signals. Deriving a timing signal at the second location using an external reference timing source may preferably comprise extracting timing information from a satellite signal received at a satellite receiver antenna configured at the second location. The method may further comprise providing the timing signal derived at the second location to the first location for synchronizing transmitting of the communications signal along the wired transmission link between the first and second locations.

Further aspects of the invention will be appreciated by the following detailed description of the invention.

### BRIEF DESCRIPTION OF THE DRAWINGS

Fig. 1 is a block schematic drawing of a communications system architecture in which the present invention may be employed.
Fig. 2 is a block schematic drawing of a conventional approach for implementing timing and a synchronization in a base station with digital radio head.
Fig. 3 is a block schematic drawing of a preferred embodiment of the present invention.
Fig. 4 is a block schematic drawing of a first example useful for understanding the present invention.
Fig. 5 is a block schematic drawing of a more detailed description of the timing generator in the preferred embodiment of the present invention.
Fig. 6 is a block schematic drawing of a second example useful for understanding the present invention.

### DETAILED DESCRIPTION OF THE INVENTION

The invention provides an improved digital radio head system and method of generating the necessary synchronization between the base station baseband processing system and the remote radio heads that are mounted nearer to the antenna tower.

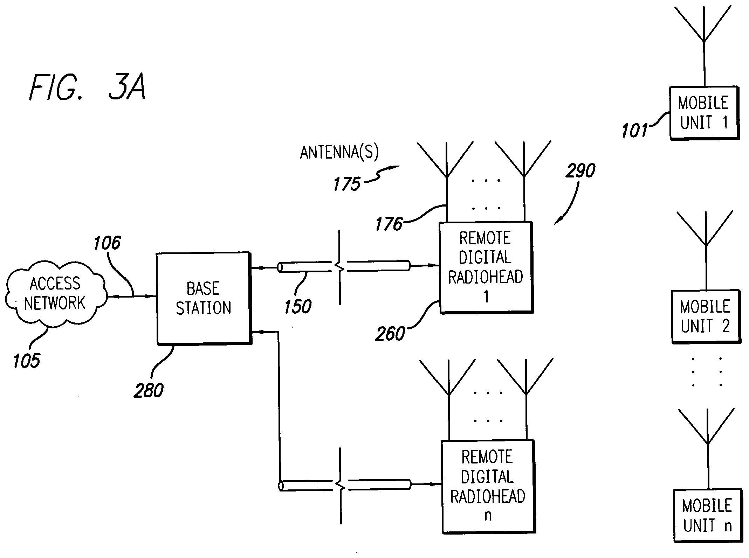

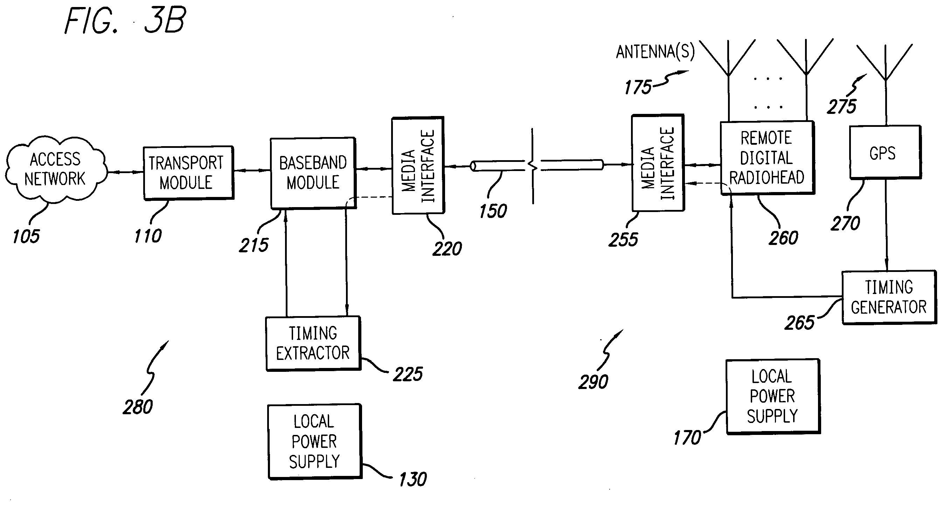

Figs. 3A and 3B show a preferred embodiment of the invention. As shown in Fig. 3A the overall architecture of the system is the same as a conventional architecture described above in relation to Fig. 1 but employs a different timing generation and related synchronization and control aspects as shown in Fig. 3B. In this case the timing is generated remotely from the first location (280) at the second remote radio head location (290) via a satellite receiver (270), satellite antenna (275), and timing generator (265). This is advantageous for many reasons. One of which is convenient access to unobstructed satellite antenna mounting space. Another is that the most critical timing is needed in the radio head. Much less precise timing is needed in the baseband module (215). So it is easier to generate the precise timing where it is needed and transfer a less precise timing back to the base station. This provides improved performance and lower system cost. The antenna (275) may be attached to the casing of the radio head (260) or it may be mounted a short distance away and connected by an inexpensive cable. In this first preferred embodiment the main difference is exchanging the timing generation and extraction locations.

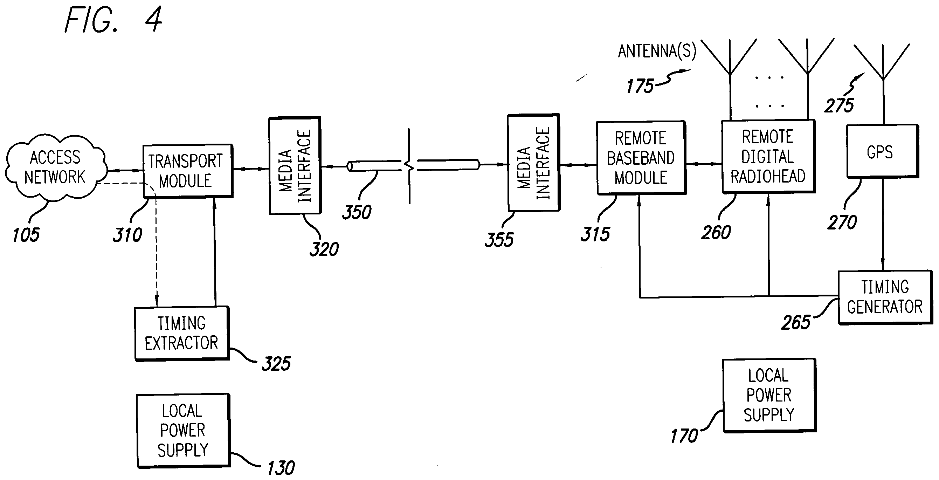

In Fig. 4 a first example useful for understanding the invention is shown. In this case a modified baseband module (315) is included at the radio head instead of the base station, which baseband module transmits and receives user data to and from the transport module (310). The timing and synchronization is done in the same manner as the first embodiment, at the radio head. In this case advantage is made of the reduced data rate necessary between the transport module (310) and the baseband module (315). The high data rate between the baseband module (315) and the radio head (260) is more easily addressed in this technique using any of a large number of common techniques for transmitting high speed electrical signals between subsystems in a single mechanical enclosure over a short distance. The lower data rate, by a factor of 20 to 100, that is distributed over (350) is much easier to transmit the required distance as determined by the spacing of the media interface (320) at the base station side of the link and a second media interface (355) at the radio head side of the link. In fact, this lowered data rate becomes critical as the number of transmit/receive chains increase as is common in modern Multi-Input, Multi-Output (MIMO) air interfaces. The number of MIMO channels, typically 2 or 4 currently, can get even larger and create an extremely large amount of digital data. These channels must be processed with critical timing accuracy, after which the detected or transmitted symbol rate is significantly reduced.

The remote baseband module (315) may contain just the physical layer (PHY) processing, in which case the media access control (MAC) layer processing is included in the functionality of the transport module (310). (The terminology PHY layer and MAC layer is in accordance with standard OSI Model terminology and definitions. Such processing is well known in the art and accordingly is not described further herein.) However, it may also be implemented such that the MAC processing is included in the remote baseband module (315) to improve the cost of the total system or to reduce the subsystems in the base station (180). In both cases the timing critical and data-rate reduction processing occurs in the remote digital radio head (260).

This low speed link requires less accurate timing precision such that timing references as previously used are not necessary. Time-stamping the data packets is sufficient with frame headers to interface to the transport module (310). The transport module (310) can extract the less precise timing needed from the access network (105) itself using standard and proprietary techniques well known in the prior art such as NTP or IEEE-1588 PTP protocols.

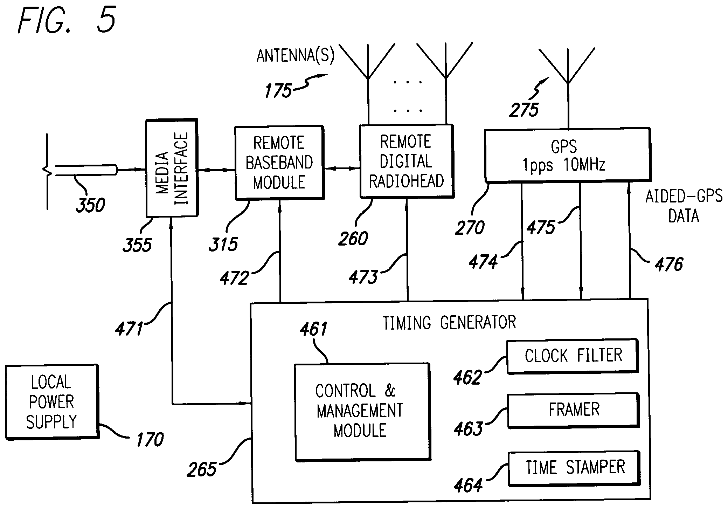

In Fig. 5 the main functional blocks of the timing generator (265) for the preferred embodiment is shown, but they apply first example shown in Fig. 4 as well. The satellite timing reference (typically GPS, but not limited to GPS) will supply a precise frequency source (475) of typically 10 MHz. It will also supply a 1 PPS signal that is time-aligned to GMT (474). If the timing ambiguity is greater than one half second in the system, a digital code of the exact time can be extracted from (270), but this is seldom necessary since packet based protocols should have already synchronized the system within hundreds of milliseconds. A feature of this invention also allows that GPS-aiding techniques can be supplied as signals (476) extracted from the timing generator (461), link (350), and transport module (310) to a properly configured satellite receiver so that its synchronization capabilities can be extended when there is low signal to noise ratio in the receive path, possibly due to poor antenna positioning.

The timing generator (265) will provide the functionality in the clock filter (462) to filter the frequency reference (475) to reduce jitter as necessary. It also includes a framer (463) to provide a reference point to real time as supplied from the 1 PPS signal (474). It also includes a time stamper (464) which will indicate the precise time for a fixed reference point in each frame. This may be done in different ways but includes adding frame numbers or time stamps. The timing generator (265) also includes a control and management module that manages the communication channel (350) to the base station via link (471). This module will transmit and receive, code and decode, data on the overhead channels of (350) that include among other things the timing information that is sent back and any messages sent through the network to the radio head for course timing and GPS aiding. The timing signals (472, 473) are sent to their respective modules for use.

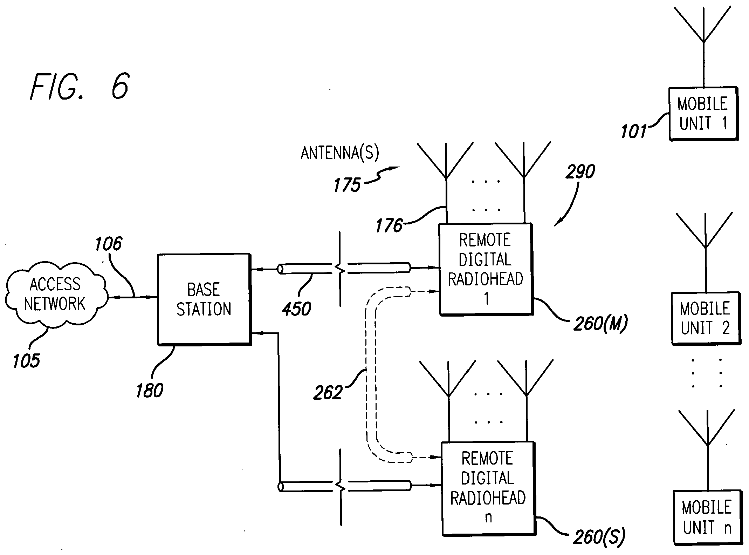

In a second example useful for understanding the invention shown in Fig. 6 a single link (450) connects the base station (180) to a master digital radio head 260 (M) and nearby additional slave radio heads 260 (S) are connected to the base station (180) through the master digital radio head 260 (M). This mode of operation does not require any substantial change to the digital radio head 260 (M) but it may provide a more cost-effective installation since only one connection is required back to the base station (180). This is feasible because each digital radio head (260) has its own precise timing reference and the aggregate data-rate has been substantially reduced so that it can fit on a single link.

The foregoing embodiments are merely illustrative and not limiting in nature and a variety of modifications may be made within the scope of the present invention, the scope of the invention being defined by the claims.

## Claims

1. A wireless communications system, comprising:
a base station (280) receiving communications signals from an access network;
one or more radio heads (260) remotely configured from the base station and coupled for communication to the base station over a wired transmission link, each radio head coupled to one or more antennas (175) to transmit and receive wireless communications signals;
a satellite receiver antenna (275) configured at the radio head location;
a timing generator (265) configured at the radio head location and coupled to the satellite receiver antenna, the timing generator configured to extract timing information from a satellite signal received at the satellite receiver antenna and provide timing signals to the radio head and to the base station,
a timing extractor (225) at the base station configured to regenerate data in a format similar to the timing signals received from the timing generator, **characterized in that**
the timing generator further comprises a control and management module configured to manage the wired transmission link (350) to the base station and transmit, receive, code and decode data on channels of the wired transmission link that include timing information and messages sent to the radio head for timing and GPS aiding to extend synchronization capabilities in case of a low signal to noise ratio in a receive path of the communications system and **in that**
the base station and radio head employ the timing signals to synchronize transmission of communications signals along the wired transmission link between the base station and radio head.

2. A wireless communications system as set out in claim 1, wherein:
- the satellite receiver antenna is a GPS receiver and the satellite signal is a GPS signal; or
- the wired transmission link is a transmission line or an optical fiber;
or
- the one or more radio heads comprise a plurality of separate radio heads coupled together through a wired link and wherein one radio head is coupled to the base station through the wired transmission link.

3. A wireless communications system as set out in claim 1, wherein the timing information from the satellite signal comprises a frequency reference and wherein the timing generator comprises a clock filter to filter the frequency reference.

4. A wireless communications system as set out in claim 3, wherein the timing information from the satellite signal further comprises a periodic real time reference signal and wherein the timing generator further comprises a framer to provide frames referenced to points in real time derived from the periodic real time reference signal.

5. A wireless communications system as set out in claim 4, wherein the timing generator further comprises a time stamper which adds a stamp to the timing signal indicating the precise time for a fixed reference point in each frame.

6. A method for providing a communications signal from a first location at an access-network connection point to a second location adjacent one or more antennas located remotely from the first location for wireless transmission at the second location, comprising:
receiving a communications signal from an access-network connection point at the first location;
transmitting the communications signal in digital form along a wired transmission link to the second location located remotely from the first location;
deriving a timing signal at the second location using an external reference timing source provided by a satellite receiver signal;
performing baseband processing on the digital communications signal at the second location using the timing signal;
providing the baseband processed signal to a radio head at the second location; and providing the timing signal derived at the second location to the first location;
regenerating, at the first location, data in a format similar to the timing signal received from the second location, wherein the first location and the second location employ the timing signal to synchronize transmission of communications signals along the wired transmission link between the first location and the second location, **characterized by**, at the second location, transmitting,
receiving, coding and decoding data on channels of the wired transmission link that include timing information and messages sent from the first location to the radio head for timing and GPS aiding to extend synchronization capabilities in case of a low signal to noise ratio in a receive path.

7. A method as set out in claim 6, wherein the baseband processing comprises physical layer processing of the digital communications signals.

8. A method as set out in claim 7, wherein the baseband processing further comprises MAC layer processing of the digital communications signals.

9. A method as set out in claim 6, wherein
deriving a timing signal at the second location using an external reference timing source comprises extracting timing information from a satellite signal received at a satellite receiver antenna configured at the second location

## Patentansprüche

1. Drahtloskommunikationssystem, das Folgendes umfasst:
eine Basisstation (280), die Kommunikationssignale von einem Zugangsnetzwerk empfängt;
einen oder mehrere Funkköpfe (260), die von der Basisstation aus abgesetzt ausgelegt und zur Kommunikation mit der Basisstation über eine drahtgebundene Übertragungsverbindung gekoppelt werden, wobei jeder Funkkopf mit einer oder mehreren Antennen (175) gekoppelt ist, um Drahtloskommunikationssignale zu senden und zu empfangen;
eine Satellitenempfängerantenne (275), ausgelegt am Funkkopfort;
einen Zeitsteuerungsgenerator (265), ausgelegt am Funkkopfort und mit der Satellitenempfängerantenne gekoppelt, wobei der Zeitsteuerungsgenerator dazu ausgelegt ist, Zeitsteuerungsinformationen aus einem an der Satellitenempfängerantenne empfangenen Satellitensignal zu extrahieren und Zeitsteuerungssignale für den Funkkopf und die Basisstation bereitzustellen,
einen Zeitsteuerungsextraktor (225) an der Basisstation, ausgelegt zum Regenerieren von Daten in einem Format ähnlich den vom Zeitsteuerungsgenerator empfangenen Zeitsteuerungssignalen, **dadurch gekennzeichnet, dass**
der Zeitsteuerungsgenerator ferner ein Steuer- und Verwaltungsmodul umfasst, das dazu ausgelegt ist, die drahtgebundene Übertragungsverbindung (350) zur Basisstation zu verwalten und Daten auf Kanälen der drahtgebundenen Übertragungsverbindung zu senden, zu empfangen, zu codieren und zu decodieren, die Zeitsteuerungsinformationen und Nachrichten umfassen, die an den Funkkopf gesendet wurden für Zeitsteuerung und GPS-Unterstützung zum Erweitern der Synchronisierungsfähigkeiten im Falle eines niedrigen Signal-Rausch-Verhältnisses in einem Empfangspfad des Kommunikationssystems, und dadurch, dass
die Basisstation und der Funkkopf die Zeitsteuerungssignale einsetzen, um die Übertragung von Kommunikationssignalen entlang der drahtgebundenen Übertragungsverbindung zwischen der Basisstation und dem Funkkopf zu synchronisieren.

2. Drahtloskommunikationssystem nach Anspruch 1, wobei:
- die Satellitenempfängerantenne ein GPS-Empfänger ist und das Satellitensignal ein GPS-Signal ist; oder
- die drahtgebundene Übertragungsverbindung eine Übertragungsleitung oder eine optische Faser ist; oder
- der eine oder die mehreren Funkköpfe mehrere separate Funkköpfe umfassen, die miteinander über eine drahtgebundene Verbindung gekoppelt sind und wobei ein Funkkopf über die drahtgebundene Übertragungsverbindung mit der Basisstation gekoppelt ist.

3. Drahtloskommunikationssystem nach Anspruch 1, wobei die Zeitsteuerungsinformationen aus dem Satellitensignal eine Frequenzreferenz umfassen und wobei der Zeitsteuerungsgenerator einen Taktfilter zum Filtern der Frequenzreferenz umfasst.

4. Drahtloskommunikationssystem nach Anspruch 3, wobei die Zeitsteuerungsinformationen aus dem Satellitensignal ferner ein periodisches Echtzeitreferenzsignal umfassen und wobei der Zeitsteuerungsgenerator ferner einen Rahmer zum Bereitstellen von Rahmen umfasst, referenziert auf Punkte in Echtzeit, abgeleitet von dem periodischen Echtzeit-Referenzsignal.

5. Drahtloskommunikationssystem nach Anspruch 4, wobei der Zeitsteuerungsgenerator ferner einen Zeitstempel umfasst, der dem Zeitsteuerungssignal einen Stempel hinzufügt, der die präzise Zeit für einen festen Referenzpunkt in jedem Rahmen anzeigt.

6. Verfahren zum Bereitstellen eines Kommunikationssignals von einem ersten Ort an einem Zugangsnetzwerk-Verbindungspunkt zu einem zweiten Ort, angrenzend an eine oder mehrere Antennen, abgesetzt vom ersten Ort befindlich, für drahtlose Übertragung am zweiten Ort, das Folgendes umfasst:
Empfangen eines Kommunikationssignals von einem Zugangsnetzwerk-Verbindungspunkt am ersten Ort;
Senden des Kommunikationssignals in digitaler Form entlang einer drahtgebundenen Übertragungsverbindung an den zweiten Ort, abgesetzt vom ersten Ort befindlich;
Ableiten eines Zeitsteuerungssignals am zweiten Ort unter Verwendung einer externen Referenzzeitquelle, bereitgestellt durch ein Satellitenempfängersignal;
Durchführen von Basisbandverarbeitung auf dem digitalen Kommunikationssignal bei einem zweiten Ort unter Verwendung des Zeitsteuerungssignals;
Bereitstellen des basisbandverarbeiteten Signals für einen Funkkopf am zweiten Ort; und
Bereitstellen des am zweiten Ort abgeleiteten Zeitsteuerungssignals für den ersten Ort;
Regenerieren, am ersten Ort, von Daten in einem Format ähnlich dem vom zweiten Ort empfangenen Zeitsteuerungssignal, wobei der erste Ort und der zweite Ort das Zeitsteuerungssignal einsetzen, um die Übertragung von Kommunikationssignalen entlang der drahtgebundenen Übertragungsverbindung zwischen dem ersten Ort und dem zweiten Ort zu synchronisieren, **gekennzeichnet durch**, am zweiten Ort, Senden, Empfangen, Codieren und Decodieren von Daten auf Kanälen der drahtgebundenen Übertragungsverbindung, die Zeitsteuerungsinformationen und Nachrichten umfassen, die vom ersten Ort an den Funkkopf gesendet wurden für Zeitsteuerung und GPS-Unterstützung zum Erweitern der Synchronisierungsfähigkeiten im Falle eines niedrigen Signal-Rausch-Verhältnisses in einem Satellitenempfangspfad.

7. Verfahren nach Anspruch 6, wobei die Basisbandverarbeitung Verarbeitung der digitalen Kommunikationssignale auf der physischen Schicht umfasst.

8. Verfahren nach Anspruch 7, wobei die Basisbandverarbeitung ferner Verarbeitung der digitalen Kommunikationssignale auf der MAC-Schicht umfasst.

9. Verfahren nach Anspruch 6, wobei Ableiten eines Zeitsteuerungssignals am zweiten Ort unter Verwendung einer externen Referenzzeitquelle Extrahieren von Zeitsteuerungsinformationen aus einem an einer Satellitenempfängerantenne, ausgelegt am zweiten Ort, empfangenen Satellitensignal umfasst.

## Revendications

1. Système de communication sans fil, comprenant :
une station de base (280) recevant des signaux de communication en provenance d'un réseau d'accès ;
une ou plusieurs têtes radio (260) configurées à distance de la station de base et couplées en communication à la station de base sur une liaison d'émission câblée, chaque tête radio étant couplée à une ou plusieurs antennes (175) pour émettre et recevoir des signaux de communication sans fil ; une antenne de récepteur satellite (275), configurée au niveau de l'emplacement de tête radio ;
un générateur de rythme (265), configuré au niveau de l'emplacement de tête radio et couplé à l'antenne de récepteur satellite, le générateur de rythme étant configuré pour extraire une information de rythme d'un signal satellite reçu au niveau de l'antenne de récepteur satellite et fournir des signaux de rythme à la tête radio et à la station de base ;
un extracteur de rythme (225) au niveau de la station de base, configuré pour régénérer des données dans un format similaire à celui des signaux de rythme reçus du générateur de rythme,
le procédé étant **caractérisé en ce que** :
le générateur de rythme comprend en outre un module de contrôle et de gestion configuré pour gérer la liaison d'émission câblée (350) vers la station de base, et émettre, recevoir, coder et décoder des données sur des canaux de la liaison d'émission câblée, qui incluent une information de rythme et des messages envoyés à la tête radio pour le rythme et l'aide GPS afin d'étendre les capacités de synchronisation en cas de faible rapport signal-bruit dans une voie de réception du système de communication,
et **en ce que** :
la station de base et la tête radio emploient les signaux de rythme pour synchroniser l'émission de signaux de communication le long de la liaison d'émission câblée entre la station de base et la tête radio.

2. Système de communication sans fil selon la revendication 1, dans lequel :
l'antenne de récepteur satellite est un récepteur GPS, et le signal satellite est un signal GPS ; ou
la liaison d'émission câblée est une ligne d'émission ou une fibre optique ; ou
la ou les têtes radio comprennent une pluralité de têtes radio indépendantes couplées ensemble par l'intermédiaire d'une liaison câblée, et une tête radio est couplée à la station de base par l'intermédiaire de la liaison d'émission câblée.

3. Système de communication sans fil selon la revendication 1, dans lequel l'information de rythme du signal satellite comprend une référence de fréquence, et dans lequel le générateur de rythme comprend un filtre d'horloge pour filtrer la référence de fréquence.

4. Système de communication sans fil selon la revendication 3, dans lequel l'information de rythme du signal satellite comprend en outre un signal de référence périodique en temps réel, et dans lequel le générateur de rythme comprend en outre un trameur pour fournir des trames se rapportant à des points en temps obtenus à partir du signal de référence périodique en temps réel.

5. Système de communication sans fil selon la revendication 4, dans lequel le générateur de rythme comprend en outre un horodateur qui ajoute au signal de rythme un horodatage indiquant l'heure précise d'un point de référence fixe dans chaque trame.

6. Procédé destiné à fournir un signal de communication d'un premier emplacement, au niveau d'un point de connexion de réseau d'accès, à un second emplacement adjacent à une ou plusieurs antennes situées à distance du premier emplacement en vue d'une émission sans fil au niveau du second emplacement, le procédé consistant à :
recevoir un signal de communication en provenance d'un point de connexion de réseau d'accès au niveau du premier emplacement ;
émettre le signal de communication sous forme numérique le long d'une liaison d'émission câblée vers le second emplacement situé à distance du premier emplacement ;
obtenir un signal de rythme au niveau du second emplacement au moyen d'une source externe de rythme de référence fournie par un signal de récepteur satellite ;
réaliser un traitement en bande de base sur le signal de communication numérique au niveau du second emplacement au moyen du signal de rythme ;
fournir le signal traité en bande de base à une tête radio au niveau du second emplacement ;
fournir le signal de rythme, obtenu au niveau du second emplacement, au premier emplacement ; et
régénérer, au niveau du premier emplacement, des données dans un format similaire à celui du signal de rythme reçu du second emplacement, le premier emplacement et le second emplacement employant le signal de rythme pour synchroniser une émission de signaux de communication le long de la liaison d'émission câblée entre le premier emplacement et le second emplacement,
le procédé étant caractérisé, au niveau du second emplacement, par les étapes consistant à émettre, recevoir, coder et décoder des données sur des canaux de la liaison d'émission câblée, qui incluent une information de rythme et des messages envoyés du premier emplacement à la tête radio pour le rythme et l'aide GPS afin d'étendre les capacités de synchronisation en cas de faible rapport signal-bruit dans une voie de réception satellite.

7. Procédé selon la revendication 6, dans lequel le traitement en bande de base comprend un traitement sur couche physique des signaux de communication numériques.

8. Procédé selon la revendication 7, dans lequel le traitement en bande de base comprend en outre un traitement sur couche MAC des signaux de communication numériques.

9. Procédé selon la revendication 6, dans lequel l'obtention d'un signal de rythme au niveau du second emplacement au moyen d'une source externe de rythme de référence consiste à extraire une information d'un signal satellite reçu au niveau d'une antenne de récepteur satellite configurée au niveau du second emplacement.
